# EUROPÄISCHE PATENTANMELDUNG

(11) **EP 1 352 867 A1**
(43) Veröffentlichungstag der Anmeldung: **15.10.2003**
(21) Anmeldenummer: 03006972.8
(22) Anmeldetag: 27.03.2003
(51) Int. Cl.: B65H 57/14, H02G 1/08

(54) **Pritschenrolle**

(30) Priorität: 12.04.2002 DE 10216423; 02.05.2002 DE 10219589
(71) Anmelder: Katimex Cielker GmbH, 54584 Jünkerath (DE)
(72) Erfinder: Hasberg, Josef, 51491 Overath (DE)
(74) Vertreter: Wanischeck-Bergmann, Axel, Dipl.-Ing.

(57) **Zusammenfassung**

Die Erfindung betrifft eine Pritschenrolle zur Führung von Kabeln, Leitungen oder dergleichen bei der Verlegung in Kabelpritschen, mit einem Rahmen, zumindest einer drehbar am Rahmen gelagerten Rolle und einer Befestigungsvorrichtung, mit der der Rahmen an der Kabelpritsche befestigbar ist. Um eine gattungsgemäße Pritschenrolle derart weiterzubilden, dass sie konstruktiv einfach ausgestaltet und damit kostengünstig herstellbar ist, wobei insbesondere die Variabilität bei der Anwendung der Pritschenrolle im Vordergrund steht, ist vorgesehen, dass der Rahmen (2) L-förmig ausgebildet ist und zwei im wesentlichen rechtwinklig zueinander verlaufende Schenkel (5, 6) hat, wobei die Rolle (3) an einem Ende eines Schenkels (5, 6) des Rahmens (2) angeordnet und die Befestigungsvorrichtung (4) mit einem Schenkel (5, 6) des Rahmens (2) verbindbar ist.

## Beschreibung

Die Erfindung betrifft eine Pritschenrolle zur Führung von Kabeln, Leitungen oder dergleichen bei der Verlegung in Kabelpritschen, mit einem Rahmen, zumindest einer drehbar am Rahmen gelagerten Rolle und einer Befestigungsvorrichtung, mit der der Rahmen an der Kabelpritsche befestigbar ist.

Pritschenrollen finden bei der Verlegung von Kabeln, Leitungen oder dergleichen in sogenannte Kabelpritschen Verwendung. Hierbei sollen die Pritschenrollen das Einziehen von Kabeln in die Kabelpritschen über längere Strecken hinsichtlich der notwendigen Zugkräfte vereinfachen und insbesondere dafür sorgen, dass die Zugbelastung derartiger Kabel oder Leitungen aufgrund zu hoher Reibkräfte nicht überschritten werden. Zu diesem Zweck werden die Pritschenrollen an den Kabelpritschen befestigt oder in den Kabelpritschen aufgestellt. Hierbei hat sich insbesondere eine seitliche Befestigung der Pritschenrollen an den Kabelpritschen bewährt. Nachdem das einzuziehende Kabel bzw. die einzuziehende Leitung über die erforderliche Strecke ausgelegt bzw. eingezogen ist, wird das Kabel bzw. die Leitung aus der Pritschenrolle herausgeschoben oder herausgenommen und in die Kabelpritsche eingelegt. Anschließend können die Pritschenrollen demontiert werden. Es besteht aber auch die Möglichkeit, die Pritschenrollen als festen Bestandteil der Kabelpritschen an Ort und Stelle zu belassen, soweit erkennbar ist, dass kurzfristig weitere Kabel oder Leitungen in die Kabelpritsche einzubringen sind. Selbstverständlich können die Pritschenrollen auch für die Entfernung eines Kabels oder einer Leitung aus der Kabelpritsche verwendet werden. In diesem Fall wird die voranstehend beschriebene Vorgehensweise in umgekehrter Reihenfolge ausgeführt.

Vorrichtungen zur Führung von Kabeln, Leitungen oder dergleichen sind aus dem Stand der Technik bekannt. Beispielsweise offenbart die EP 0 445 312 B1 eine Anordnung einer für das Einziehen eines Kabels vorgesehenen Vorrichtung, wobei das Kabel in eine aufgehängte Kabelpritsche eingezogen werden soll. In der Kabelpritsche sind Pritschenrollen angeordnet, die in Form von gleichschenkligen Dreiecken aufgebaut sind, wobei sie so aufgestellt sind, dass eine Ecke frei nach oben ragt, während die beiden anderen Ecken auf dem Boden der Kabelpritsche aufliegen. Die Ecken bestehen aus Eckklötzen, zwischen welchen Führungsrollen leicht drehbar gelagert sind. Zur Schonung und leichteren Umlenkung von Kabeln und Bögen oder Ecken der Kabelpritsche weisen die Führungsrollen nach ihren Enden zu konische Erweiterungen auf, die im Zusammenspiel mit den jeweils benachbarten Führungsrollen keine Beschädigung der Kabel zulassen. Die Führungsrollen sind auf Achsen drehbar gelagert, die mit ihren entsprechenden Enden in entsprechenden Bohrungen der Eckklötze gehaltert und durch Querstifte arretiert sind. Die Führungsrollen sitzen, zweckmäßigerweise unter Zwischenschaltung von Kugellagern oder anderen Wälzlagern, leicht drehbar auf diesen Achsen. Eine der Führungsrollen ist mit ihrer Achse schwenkbar bzw. herausklappbar gelagert, um das eingezogene Kabel oder eine eingezogene Kabeleinziehhilfe, beispielsweise einen Glasfaserstab in einfacher Weise aus den Pritschenrollen entfernen zu können. Diese Pritschenrollen haben sich insbesondere für das Einziehen leichter Kabel bzw. Einziehhilfen für Kabel bewährt.

Aus dem Stand der Technik sind ferner Pritschenrollen bekannt, die aus einem U-förmigen Rahmen mit zwei Schenkeln und einem die Schenkel verbindenden Steg bestehen. Zwischen den Schenkeln ist zumindest eine Rolle drehbar gelagert, die ebenfalls eine die Rolle durchgreifende Achse aufweist, welche Achse beidseitig in entsprechenden Öffnungen der Schenkel angeordnet sind. Die Achse weist an ihren Enden Gewindeabschnitte auf, auf welche Flügelmuttern zum Verspannen der Achse zwischen den Schenkeln aufgeschraubt sind.

Darüber hinaus sind auf dem Markt Pritschenrollen bekannt, die ebenfalls aus einem U-förmigen Rahmen bestehen, wobei an dem Rahmen Haltelaschen angeordnet sind, welche der Halterung der eine Rolle durchgreifende Achse dienen. Insgesamt sind bei diesen Pritschenrollen vier Rollen vorgesehen, von denen jeweils zwei parallel und im Abstand zueinander angeordnet sind und die vier Rollen insgesamt eine quadratische Führung für das Kabel oder die Leitung ausbilden. Bei diesen Pritschenrollen hat es sich als nachteilig erwiesen, dass die Konstruktion sehr aufwendig und damit kostenintensiv ist. Darüber hinaus weisen derartige Pritschenrollen ein hohes Gewicht auf, so dass insbesondere bei entsprechend groß dimensionierten Rollen zur Führung von Kabeln mit einem großen Durchmesser und damit einem hohen Gewicht Handhabungsschwierigkeiten bei der Montage und Demontage der Pritschenrollen auftreten. Darüber hinaus besteht der Nachteil, dass derartige Pritschenrollen hinsichtlich ihrer Variabilität sehr eingeschränkt sind, da diese Pritschenrollen immer für einen bestimmten Anwendungsfall ausgebildet sind. Es ergibt sich schließlich noch der Nachteil, dass die Montage und Demontage der für die Öffnung des Führungskanals für das Kabel zuständigen demontierbaren Rolle sehr aufwendig ist.

Ausgehend von diesem Stand der Technik liegt der Erfindung die **Aufgabe** zugrunde, eine gattungsgemäße Pritschenrolle derart weiterzubilden, dass sie konstruktiv einfach ausgestaltet und damit kostengünstig herstellbar ist, wobei insbesondere die Variabilität bei der Anwendung der Pritschenrolle im Vordergrund steht.

Die **Lösung** dieser Aufgabenstellung sieht bei einer gattungsgemäßen Pritschenrolle vor, dass der Rahmen L-förmig ausgebildet ist und zwei im wesentlichen rechtwinklig zueinander verlaufende Schenkel hat, wobei die Rolle an einem Ende eines Schenkels des Rahmens angeordnet und die Befestigungsvorrichtung mit einem Schenkel des Rahmens verbindbar ist.

Wesentliche Merkmale der erfindungsgemäßen Pritschenrolle sind somit der L-förmige Rahmen, der eine einfache Konstruktion und damit eine kostengünstige Herstellung der Pritschenrolle ermöglicht und die mit einem Schenkel des Rahmens verbindbare Befestigungsvorrichtung, die somit hinsichtlich der Variabilität der Montage der Pritschenrolle in einfacher Weise an die gegebenen Montageverhältnisse angepasst werden kann, in dem die Befestigungsvorrichtung nicht fester Bestandteil des Rahmens, sondern austauschbar am Rahmen befestigt ist.

Eine alternative **Lösung** dieser Aufgabenstellung sieht vor, dass der Rahmen L-förmig ausgebildet ist und zwei im wesentlichen rechtwinklig zueinander verlaufende Schenkel hat, wobei die Rolle an einem Ende eines Schenkels des Rahmens angeordnet und die Befestigungsvorrichtung mit dem freien Ende einer Achse der Rolle verbindbar ist.

Bei dieser Ausgestaltung der erfindungsgemäßen Pritschenrolle erfolgt die Befestigung der Pritschenrolle somit an der Achse der Rolle, beispielsweise über zwei drehbeweglich an der Achse befestigte Platten, zwischen denen eine Seitenwandung der Kabelpritsche angeordnet wird, woraufhin die beiden Platten dann gegeneinander unter Zwischenlage der Seitenwandung der Kabelpritsche verspannt werden. Die Verspannung kann beispielsweise durch einen Schraubbolzen erfolgen, der in die äußere Platte eingeschraubt ist und die hohl ausgebildete Achse der Rolle durchgreift.

Eine Weiterbildung der beiden voranstehend genannten alternativen Pritschenrollen sieht vor, dass zwei Rollen zueinander beabstandet an einem Schenkel des Rahmen angeordnet sind, wobei ihre Drehachsen im wesentlichen parallel zueinander ausgerichtet sind und sich in die gleiche Richtung erstrecken. Diese Ausgestaltung hat den Vorteil, dass eine derartige Pritschenrolle insbesondere bei einem Kurvenverlauf der Kabelpritschen bzw. bei um einen Winkel abgewinkelten Kabelpritschen eine verbesserte Führung der Kabel bzw. Leitungen ermöglicht, wobei auf eine zutreffende Ausrichtung der Pritschenrollen in Abhängigkeit der Kurve verzichtet werden kann.

Es ist ferner vorgesehen, dass jeder Schenkel des Rahmens zwei Rollen aufweist, die jeweils zueinander beabstandet angeordnet sind und im wesentlichen parallel zueinander verlaufende Drehachsen aufweisen, die sich paarweise in die gleiche Richtung erstrecken. Bei dieser Ausgestaltung weist jeder Schenkel zwei Rollen auf, wobei die Achsen der Rollen der beiden Schenkel rechtwinklig zueinander verlaufen, so dass die vier Rollen insgesamt einen Führungsraum begrenzen und jede Seite des Führungsraums durch eine Rolle begrenzt ist.

Zumindest eine Rolle eines Schenkels des Rahmens ist bei dieser Ausführungsform lös- und demontierbar an diesem Schenkel des Rahmens befestigt, so dass nach einem Lösen und Demontieren dieser Rolle der Führungsraum zum Einlegen oder Herausnehmen eines Kabels oder einer Leitung geöffnet ist. Alternativ kann vorgesehen sein, dass zumindest eine Rolle eines Schenkels des Rahmens schwenk- oder klappbar an diesem Schenkel des Rahmens befestigt ist. Diese Ausgestaltung hat insbesondere den Vorteil, dass die schenk- oder klappbare Rolle im wesentlichen unverlierbar am Schenkel des Rahmens angeordnet ist.

Nach einem weiteren Merkmal der Erfindung ist vorgesehen, dass jeder Schenkel des Rahmens eine Aufnahme für die Befestigungsvorrichtung aufweist. Durch diese Ausgestaltung kann die Pritschenrolle in einer Vielzahl von Positionen an der Kabelpritsche befestigt werden. Hierdurch kann beispielsweise die Zugänglichkeit der lös- und demontierbaren bzw. schwenk- oder klappbaren Rolle verbessert werden. Abgesehen davon besteht die Möglichkeit, die lös- und demontierbare bzw. die schwenk- oder klappbare Rolle in Abhängigkeit des Einfügens oder der Herausnahme des Kabels relativ zur Kabelpritsche anzuordnen. Beispielsweise kann durch die unterschiedliche Anordnung der Pritschenrolle an der Kabelpritsche festgelegt werden, ob das Kabel nach oben oder seitlich aus der Pritschenrolle herausgenommen werden kann.

Vorzugsweise besteht die Aufnahme aus zumindest zwei rechtwinklig zueinander im Schenkel des Rahmens ausgerichteten Bohrungen, die insbesondere zumindest einen Gewindeabschnitt aufweisen, der beispielsweise der Befestigung eines Schraubbolzens dient. Die Anordnung von zwei rechtwinklig zueinander im Schenkel verlaufenden Bohrungen hat den Vorteil, dass unterschiedliche Befestigungsvorrichtungen in einfacher Weise an einem der beiden Schenkel angeordnet werden können.

Die Bohrungen sind insbesondere sich kreuzend im Schenkel des Rahmens angeordnet, um eine Vielzahl von Befestigungsmöglichkeiten zu schaffen.

Nach einem weiteren Merkmal der Erfindung ist vorgesehen, dass zumindest eine Bohrung im Bereich der Drehachse einer Rolle angeordnet ist und vorzugsweise koaxial zu dieser Drehachse verläuft. Vorzugsweise ist diese Bohrung im Bereich der Drehachse angeordnet, die dem Knotenpunkt der beiden Schenkel des Rahmens nächstliegend zugeordnet ist.

Es ist weiterhin vorgesehen, dass die Bohrungen, welche paarig im Schenkel des Rahmens angeordnet sind, im wesentlichen im Mittelbereich der Schenkel des Rahmens angeordnet sind, so dass mit identischen Befestigungsvorrichtungen die Pritschenrolle sowohl mit zur Kabelpritsche ausgerichteten Schenkel, als auch entfernt von der Kabelpritsche angeordnetem Schenkel der Pritschenrolle befestigt werden kann.

Die Schenkel des Rahmens sind vorzugsweise versetzt zueinander angeordnet, um mit einer möglichst geringen Grundfläche die Anordnung von vier Rollen mit relativ großem Durchmesser zu ermöglichen. Ergänzend kann hierzu vorgesehen sein, dass die Achsen der Rollen außermittig mit den Schenkeln des Rahmens verbunden sind. Die Verbindung der insbesondere als Hohlachsen ausgebildeten Achsen erfolgt beispielsweise durch eine Verpressung der Achse in entsprechenden Bohrungen der Schenkel des Rahmens. Ergänzend kann eine formschlüssige Verbindung, beispielsweise eine Keilverbindung vorgesehen sein. Selbstverständlich besteht auch die Möglichkeit, die in die Bohrungen des Schenkels eingesetzten Achsen mit dem Schenkel zu verschweißen, wobei auch eine Punktverschweißung möglich ist.

Der Rahmen besteht aus Profilabschnitten, die vorzugsweise im Querschnitt rechtwinklig, insbesondere rechteckförmig ausgebildet sind. Vorzugsweise sind die Profilabschnitte des Rahmens als Hohlprofile ausgebildet, um das Gewicht der Pritschenrolle insgesamt zu reduzieren. Hohlprofile haben darüber hinaus den Vorteil, dass die in entsprechende Bohrungen der Schenkel eingesetzten Achsen der Rollen innerhalb des Hohlprofils mit dem Schenkel verschweißt werden können.

Nach einem weiteren Merkmal der Erfindung ist vorgesehen, dass die Schenkel des Rahmens miteinander verschweißt sind. Es besteht aber auch die Möglichkeit, die Schenkel des Rahmens miteinander zu verschrauben bzw. den Rahmen insgesamt als Druckgussteil, insbesondere aus Aluminiumguss herzustellen.

Es ist nach einem weiteren Merkmal der Erfindung vorgesehen, dass die fest mit dem Rahmen verbundenen Rollen eine drehfest in einem Schenkel des Rahmens befestigte Hohlachse und einen drehbar auf der Hohlachse gelagerten Hohlzylinder aufweisen. Die Hohlachsen, welche als Stummelachsen ausgebildet sein können, bestehen aus Metall, während die Hohlzylinder aus einem reibungsarmen, sich elektrostatisch nicht oder zumindest nur gering aufladenden Kunststoff bestehen. Die Hohlzylinder auf die Hohlachsen aufgesteckt. Auf eine zusätzliche Lagerung, beispielsweise in Form von Kugel- oder Walzenlager kann bei der hier vorliegenden Pritschenrolle verzichtet werden.

Nach einem weiteren Merkmal der Erfindung ist vorgesehen, dass die lösbar an einem Schenkel des Rahmens angeordnete Rolle eine Hohlachse durchgreifende Stange aufweist, die einen in eine Ausnehmung des Schenkels einsteckbaren Abschnitt hat, wobei der Abschnitt der Stange drehfest mit der Ausnehmung befestigbar, insbesondere klemmbar ist. Vorzugsweise ist die Stange als Gewindestange ausgebildet. Es ist aber ausreichend, wenn dieses Gewinde sich über einen Teilabschnitt der Stange erstreckt. Vorzugsweise ist das Gewinde im Bereich des vom Schenkel entfernt liegenden Endes der Stange angeordnet und trägt eine Handhabe, die auf das Gewinde aufschraubbar ist und mit der die notwendige Spannkraft übertragen wird. Zu diesem Zweck weist die Hohlachse an ihren beiden Enden Ringscheiben auf, von denen eine an dem Schenkel mit der Ausnehmung und die andere an der Handhabe anliegt.

Bei der Ausgestaltung mit der schwenk- oder klappbaren Rolle ist vorzugsweise vorgesehen, dass die schwenk- oder klappbar an einem Schenkel des Rahmens angeordnete Rolle eine Drehachse mit einem T-förmigen Ende aufweist, welches Ende in eine Öffnung im Schenkel eingreift, die die Schwenk- oder Klappbewegung der Drehachse relativ zum Schenkel begrenzt. Die Arretierung dieser Rolle erfolgt analog zu der voranstehend beschriebenen Ausführung mit der lösbaren Rolle, wobei wiederum zwei Ringscheiben beidseits der Rolle vorgesehen sind. Die Rolle wird auch in diesem Fall von einer Stange durchgriffen, die einerseits das T-förmige Ende und andererseits eine Handhabe aufweist, die auf einem Gewindeabschnitt der Stange aufgeschraubt ist und mit der die Rolle in ihrer Position relativ zum Schenkel verspannbar ist.

Es ist nach einem weiteren Merkmal der Erfindung vorgesehen, dass die Befestigungsvorrichtung als eine vorzugsweise an einem Schenkel unter Zwischenlage einer Wandung der Kabelpritsche verspannbare Platte ausgebildet ist. Die Platte kreisbogenabschnittförmig ausgebildet und mit einer Schraube in eine der Aufnahmen in den Schenkeln des Rahmens verschraubbar ist.

Alternativ zu einer kreisbogenabschnittförmigen Platte kann auch eine solche Platte Verwendung finden, die an ihren beiden Enden abgekantet ist. Vorzugsweise ist der Abkantungswinkel der Enden < 90°. Diese Ausgestaltung hat insbesondere den Vorteil, dass sie mit einer Vielzahl von Seitenwandungen der hier in Rede stehenden Kabelpritschen kombinierbar ist, ohne dass an den Seitenwandungen Beschädigungen durch zu hohe Spannkräfte auftreten.

Nach einem weiteren Merkmal der Erfindung ist vorgesehen, dass die Schraube, mit der die Platte an einem Schenkel des Rahmens befestigt ist, an ihrem in die Aufnahme eingreifenden Ende eine im Querschnitt sechseckig ausgebildete Ausnehmung zum Ansatz eines Drehwerkzeuges hat. Durch diese Ausgestaltung kann nämlich die Schraube von ihren beiden Enden aus angezogen und gelöst werden, wobei im Bereich des in die Aufnahme eingreifenden Endes ein entsprechendes Drehwerk notwendig ist. Hierzu hat sich beispielsweise eine im Querschnitt sechseckiger Schlüssel bewährt. Selbstverständlich sind auch andere Ausgestaltungen, beispielsweise ein Vierzahn oder ein Kreuzschlitz möglich, um die gleiche Funktion zu erzielen.

Es ist nach einem weiteren Merkmal der Erfindung vorgesehen, dass die Befestigungsvorrichtung als U-förmiger Bügel mit zwei Schenkeln und einem die Schenkel verbindenden Steg ausgebildet ist, wobei die Schenkel jeweils zumindest eine Bohrung aufweisen, welche Bohrungen koaxial zueinander angeordnet sind. Der U-förmige Bügel umgreift einen Schenkel des Rahmens und ist durch eine die Bohrungen durchgreifenden Bolzen am Rahmen befestigbar. Derart ausgebildet kann die erfindungsgemäße Pritschenrolle in einfacher Weise an horizontal oder vertikal verlaufenden Profilträgern befestigt werden. Derartige Profilträger werden beispielsweise mit Kabelpritschen verbunden, insbesondere verschweißt oder verschraubt, um die Kabelpritschen an einer Gebäudedecke aufzuhängen. Demzufolge hat es sich als vorteilhaft erwiesen, dass der Bügel mit einem die Bohrung in den Schenkeln des Bügels und einen Schenkel des Rahmens durchgreifenden Bolzen am Rahmen befestigbar ist. Selbstverständlich können auch mehr als jeweils eine Bohrung in einem Schenkel des U-förmigen Bügels angeordnet sein, so dass der Bügel in Abhängigkeit seiner Länge auf unterschiedliche Profilgrößen relativ zum Rahmen der Pritschenrolle einstellbar ist.

Nach einem weiteren Merkmal der Erfindung ist vorgesehen, dass eine Bohrung eines Schenkels des Bügels mit einem Innengewinde ausgebildet ist, so dass die Montage der Pritschenrolle an einem vertikal oder horizontal verlaufenden Profilträger der Kabelpritsche wesentlich vereinfacht ist. Alternativ kann natürlich vorgesehen sein, dass der Bolzen an beiden Enden eine verschraubbare Handhabe hat, so dass über die beiden Handhaben der U-förmige Bolzen am Schenkel des Rahmens verspannbar ist.

Um den U-förmigen Bügel auch an solchen Profilträgern befestigen zu können, deren Kantenlänge kleiner ist, als der Abstand der beiden Schenkel des U-förmigen Bügels ist vorgesehen, dass der Bügel in seinem die Schenkel verbindenden Steg eine Bohrung zur Aufnahme eines Feststellbolzens aufweist. Die Bohrung im Steg weist insbesondere ein Innengewinde auf, in die eine Gewindestange mit außen angeordneter Handhabe einschraubbar ist, wobei an dem der Handhabe gegenüberliegenden Ende des Gewindebolzens ein Auflageteller ergänzend vorgesehen sein kann. Dieser Aufnahmeteller kann bei einem entsprechenden Profilträger zur Auflage gebracht werden, woraufhin die Pritschenrolle mit dem Profilträger verspannt wird.

Nach einem weiteren Merkmal der Erfindung ist vorgesehen, dass die Befestigungsvorrichtung als Klemmstab ausgebildet ist, der in eine Bohrung des Rahmens einsteckbar und in der Bohrung verklemmbar ist. Vorzugsweise wird ein solcher Klemmstab in eine koaxial mit der Hohlachse der Rolle zusammenfallenden Bohrung des Schenkels des Rahmens eingesteckt.

Eine Weiterbildung dieser Ausführungsform sieht vor, dass der Klemmstab aus einer Achse besteht, die zumindest in einem Teilbereich ein Außengewinde mit einer daran spindelbar geführten Spindelmutter aufweist und die Spindelmutter mit einer auf die Achse aufgesteckten Hülse derart zusammenwirkt, dass Spindelmutter und Hülse in der Bohrung des Rahmens verspannbar sind.

Am Klemmstab sind vorzugsweise zwei relativ zueinander bewegbare Klemmplatten angeordnet, mit denen der Klemmstab an einer Seitenwandung der Kabelpritsche befestigt wird. Die Verspannung des Klemmstabes an der Kabelpritsche und die Verspannung der Spindelmutter und der Hülse erfolgt gleichzeitig über eine an einem Ende des Klemmstabs angeordnete Handhabe.

Wie bereits ausgeführt, ist die Rolle vorzugsweise auf einer Stummelachse angeordnet, so dass die Rolle nur einseitig mit dem Rahmen, nämlich dem Schenkel eines Rahmens verbunden ist.

Schließlich ist nach einem weiteren Merkmal der Erfindung vorgesehen, dass die Achse der Rolle drehfest mit dem Schenkel des Rahmens verbunden, insbesondere verpresst, verschweißt und/oder formschlüssig verbunden ist.

Weitere Merkmale und Vorteile der Erfindung sich aus der nachfolgenden Beschreibung der zugehörigen Zeichnung, in der bevorzugte Ausführungsformen der erfindungsgemäßen Pritschenrolle dargestellt sind. In der Zeichnung zeigen:
- Figur 1: Eine erste Ausführungsform einer Pritschenrolle in teilweise geschnitten dargestellter Seitenansicht;
- Figur 2: eine zweite Ausführungsform einer Pritschenrolle in teilweise geschnitten dargestellter Seitenansicht;
- Figur 3: eine dritte Ausführungsform einer Pritschenrolle in Seitenansicht;
- Figur 4: die Pritschenrolle gemäß Figur 3 in Draufsicht;
- Figur 5: eine vierte Ausführungsform einer Pritschenrolle in Seitenansicht;
- Figur 6: eine fünfte Ausführungsform einer Pritschenrolle in Seitenansicht;
- Figur 7: die Pritschenrolle gemäß Figur 6 in einer Draufsicht;
- Figur 8: ein Bauteil der Pritschenrolle gemäß Figur 6 und 7 in Draufsicht;
- Figur 9: eine alternative Ausgestaltung der Pritschenrolle gemäß den Figuren 6 und 7 in Draufsicht;
- Figur 10: eine sechste Ausführungsform einer Pritschenrolle in teilweise geschnitten dargestellter Draufsicht;
- Figur 11: ein Befestigungselement zur Befestigung einer Pritschenrolle gemäß den Figuren 1 bis 10 an einer Kabelpritsche;
- Figur 12: eine Klemmplatte der Befestigungsvorrichtung gemäß Figur 11 in Draufsicht;
- Figur 13: eine zweite Klemmplatte der Befestigungsvorrichtung gemäß Figur 11 in Draufsicht und
- Figur 14: eine siebte Ausführungsform einer Pritschenrolle in teilweise geschnitten dargestellter Seitenansicht.

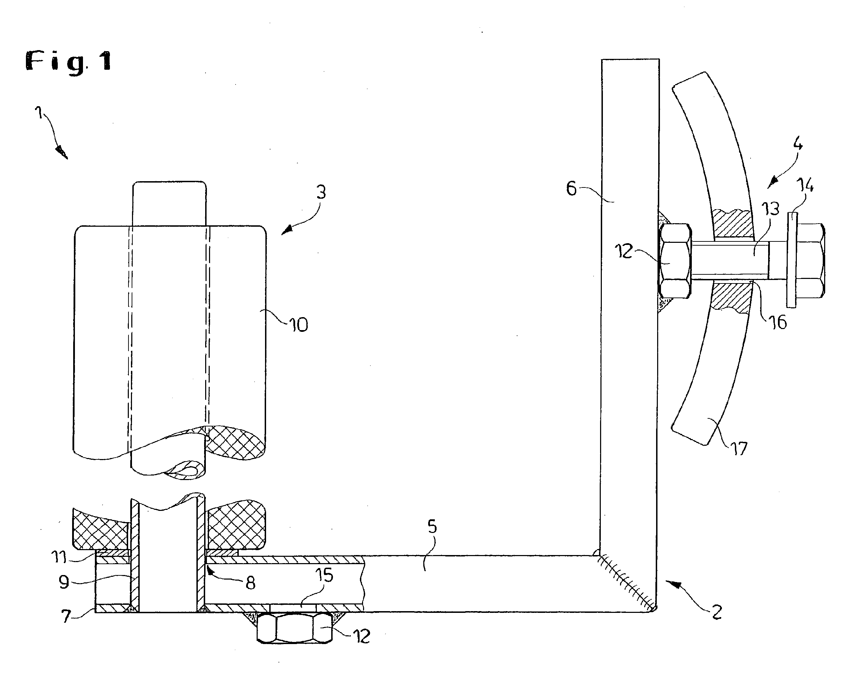

Eine in Figur 1 dargestellte Pritschenrolle 1 besteht aus einem Rahmen 2 und einer drehbar am Rahmen 2 gelagerten Rolle 3 sowie einer Befestigungsvorrichtung 4. Der Rahmen 2 ist L-förmig ausgebildet und weist zwei rechtwinklig zueinander verlaufende Schenkel 5 und 6 auf, wobei jeder Schenkel aus einem im Querschnitt rechteckförmig ausgebildeten Hohlprofil besteht. Die Schenkel 5 und 6 sind an einem Ende unter einem Winkel von 45° geschnitten und miteinander verschweißt.

Der Schenkel 5 weist an seinem freien Ende 7 eine Bohrung 8 auf, in die eine hohl ausgebildete Drehachse 9 eingesetzt ist. Die Drehachse 9 ist in der Bohrung 8 verschweißt und trägt einen drehbar auf der Drehachse 9 gelagerten Hohlzylinder 10 aus einem elektrostatisch nicht oder nur sehr gering aufladbaren Kunststoff.

Zwischen dem Hohlzylinder 10 und dem Schenkel 5 des Rahmens 2 ist eine Distanzplatte 11 angeordnet. Der Hohlzylinder 10 kann durch eine nicht näher dargestellte Mutter oder durch einen Sprengring in axialer Richtung der Drehachse 9 festgelegt sein.

Der rechtwinklig zum Schenkel 5 ausgerichtete Schenkel 6 verläuft parallel zur Drehachse 9 und weist auf seiner Außenseite eine aufgeschweißte Mutter 12 auf. In diese Mutter 12 ist ein Schraubbolzen 13 mit einer Kragenplatte 14 eingeschraubt. Im Bereich der aufgeschweißten Mutter 12 weist der Schenkel 6 eine Bohrung 15 auf, in die der Schraubbolzen 13 einschraubbar ist.

Die Bohrung 15 ist im Bereich des geschnitten dargestellten Abschnitts des Schenkels 5 dargestellt, wobei der Schenkel 5 in Analogie zum Schenkel 6 ebenfalls eine aufgeschweißte Mutter 12 aufweist.

Der Schraubbolzen 13 durchgreift eine Bohrung 16 in einer kreisbogenabschnittförmig ausgebildeten Platte 17. Die Platte 17 dient der Befestigung der Pritschenrolle 1 an einer nicht näher dargestellten Kabelpritsche, nämlich im Bereich einer Seitenwandung dieser Kabelpritsche. Diese Seitenwandung der Kabelpritsche wird bei montierter Pritschenrolle 1 zwischen dem unteren Ende der Platte 17 und dem Schenkel 6 klemmend angeordnet, wobei die notwendige Spannkraft durch ein Anziehen des Schraubbolzen 13 erzielt wird, in dem die Kragenplatte 14 zur Anlage auf der Platte 17 gebracht wird.

Durch die Ausgestaltung beider Schenkel 5 und 6 mit einer aufgeschweißten Mutter 12 und der darunter liegenden Bohrung 15 kann die Platte 17 mit dem Schraubbolzen 13 sowohl am Schenkel 6, als auch am Schenkel 5 befestigt werden. Hierdurch wird gewährleistet, dass die Pritschenrolle 1 sowohl mit lotrecht ausgerichteter Drehachse 9 als auch mit vertikal ausgerichteter Drehachse 9 an einer Kabelpritsche befestigt werden kann.

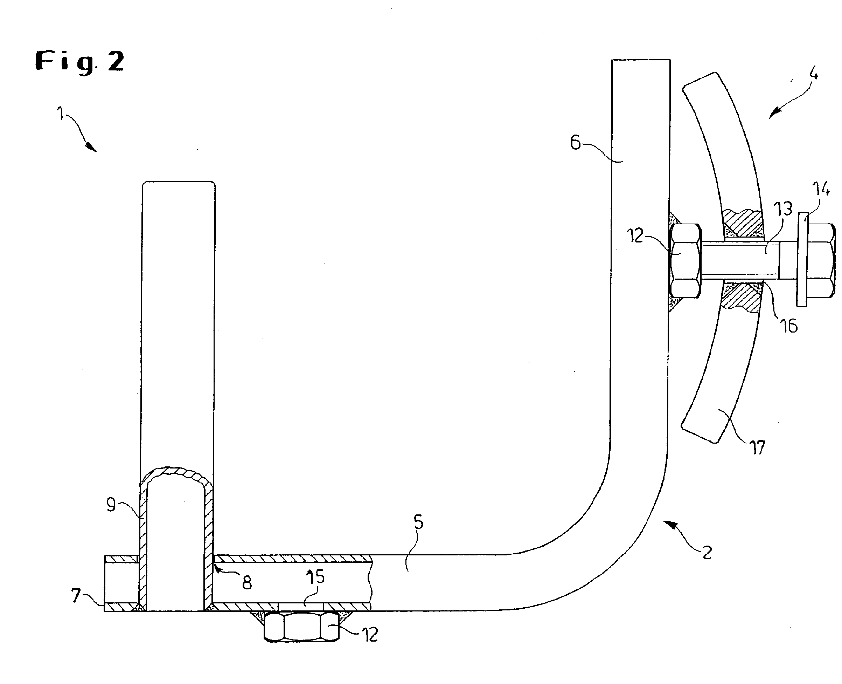

In Figur 2 ist eine mit der Ausführungsform gemäß Figur 1 übereinstimmende Ausführungsform einer Pritschenrolle 1 dargestellt. Es besteht lediglich ein Unterschied bei der Ausgestaltung des Rahmens 2, der bei der Ausführungsform gemäß Figur 1 aus zwei miteinander verschweißten Profilabschnitten und bei der Ausführungsform gemäß Figur 2 aus einem L-förmig gebogenen Profilabschnitt besteht.

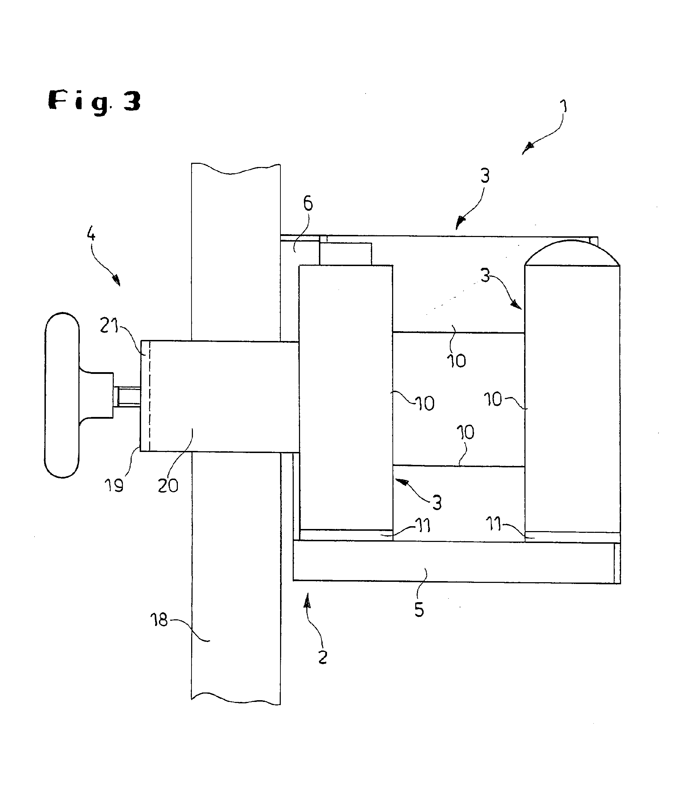

Die voranstehend beschriebenen Ausführungsformen der Pritschenrolle 1 weisen lediglich eine Rolle 3 auf, die an einem Ende des Schenkels 5 angeordnet ist, wobei sich die diesbezügliche Drehachse 9 der Rolle 3 rechtwinklig zur Längsachse des Schenkels 5 und parallel zur Längsachse des Schenkels 6 erstreckt. In den Ausführungsformen der nachfolgend beschriebenen Figuren 3 bis 10 weist jede Pritschenrolle 1 vier Rollen 3 auf, wobei jeweils zwei Rollen 3 am Schenkel 5 und zwei Rollen 3 am Schenkel 6 angeordnet sind. Die an einem Schenkel 5 oder 6 angeordneten Rollen 3 sind parallel zueinander ausgerichtet, so dass sich deren Drehachsen 9 ebenfalls in paralleler und gleicher Richtung erstrecken. Darüber hinaus ist zu erkennen, dass die Drehachsen 9 der an den beiden Schenkeln 5 und 6 angeordneten Rollen 3 jeweils parallel zu dem benachbarten Schenkel 5 bzw. 6 und in gleicher Richtung ausgerichtet angeordnet sind.

Figur 3 zeigt einen Profilträger 18, der einerseits mit einer nicht näher dargestellten Kabelpritsche und andererseits mit einer Gebäudedecke verbunden ist. An diesem Profilträger 18 ist die Pritschenrolle 1 über die Befestigungsvorrichtung 4 befestigt, wobei die Befestigungsvorrichtung 4 aus einem U-förmig ausgebildeten Bügel 19 besteht, der zwei Schenkel 20 und einen die Schenkel verbindenden Steg 21 aufweist. Die beiden Schenkel 20 sind parallel zueinander ausgerichtet. Der Steg 21 verläuft rechtwinklig zu den beiden Schenkeln 20.

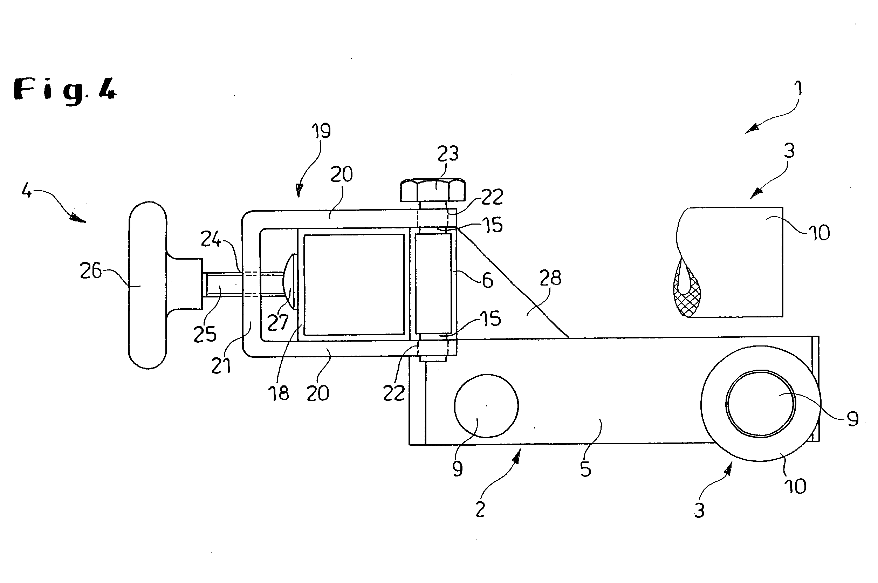

Der Bügel 19 umgreift den Profilträger 18 und ist mit dem Schenkel 6 des Rahmens 2 verschraubt. Zu diesem Zweck weist jeder Schenkel 20 eine Bohrung 22 auf, wobei die beiden Bohrungen 22 in den parallel zueinander verlaufenden Schenkeln 20 koaxial ausgerichtet sind. Die Bohrungen 22 sind von einem Schraubbolzen 23 durchgriffen, wobei die in der Figur 4 untere Bohrung ein Innengewinde aufweist, welches mit dem Schraubbolzen 23 verschraubbar ist. Der Schraubbolzen 23 durchgreift die Bohrungen 22 in den Schenkeln 20 des Bügels 19 und koaxial zu den Bohrungen 22 ausgerichtete Bohrungen 15 im Schenkel 6 des Rahmens 2.

In Figur 4 ist zu erkennen, dass auch der Steg 21 eine Bohrung 24 mit einem Innengewinde aufweist, in die ein Schraubbolzen 25 mit einer Handhabe 26 eingeschraubt ist. Die Handhabe 26 ist außerhalb des Bügels 19 angeordnet. Der Schraubbolzen 25 durchgreift den Steg 21 und weist an seinem dem Profilträger 18 zugewandten Ende einen Druckteller 27 auf, mit dem die Pritschenrolle 1 am Profiträger 18 verspannbar ist.

Aus Figur 4 ist ferner zu erkennen, dass die beiden Schenkel 5, 6 versetzt zueinander angeordnet sind und den L-förmigen Rahmen bilden. Die beiden Schenkel 5, 6 sind mit einem stabilisierenden, dreieckförmig ausgebildeten Verstärkungselement 28 miteinander verschweißt.

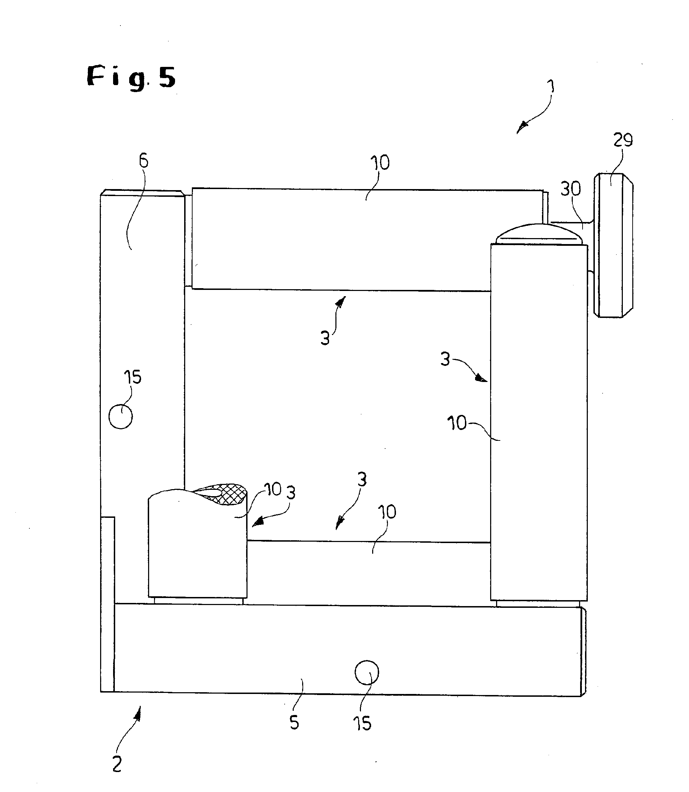

Figur 5 zeigt eine weitere Ausführungsform der Pritschenrolle 1. In ihrer grundlegenden Konstruktion stimmt die Ausführungsform der Pritschenrolle 1 gemäß Figur 5 mit der Ausführungsform der Pritschenrolle gemäß den Figuren 3 und 4 überein. Es ist zu erkennen, dass beide Schenkel 5 und 6 Bohrungen 15 aufweisen, so dass die in den Figuren 3 und 4 dargestellte Befestigungsvorrichtung 4 sowohl am Schenkel 5 als auch am Schenkel 6 angeordnet werden kann.

Ergänzend ist in Figur 5 eine Handhabe 29 am Ende einer Achse 30 dargestellt. Die Achse 30 durchgreift die nicht näher dargestellte Drehachse 9 der oberen Rolle 3 und weist ein T-förmiges Ende 31 auf, welches in eine Öffnung 32 des Schenkels 6 des Rahmens 2 eingreift.

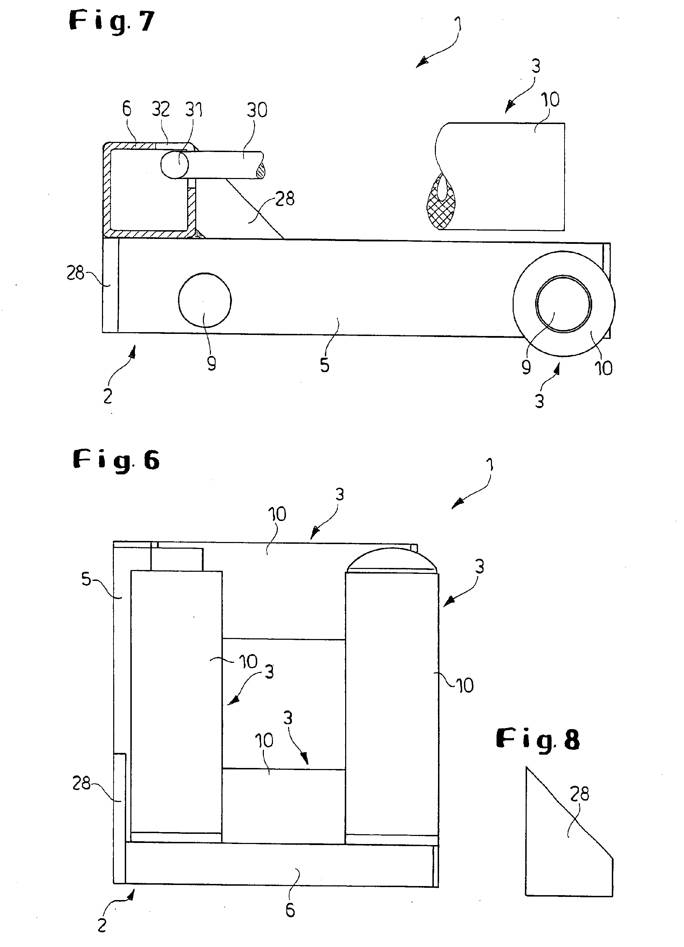

Die Handhabe 29 ist auf die Achse 30 derart aufgeschraubt, dass die die obere Rolle 3 drehbar haltende, nicht näher dargestellte Drehachse 9 mit dem Schenkel 2 derart verspannbar ist, dass die obere Rolle 3 entweder in der in Figur 7 dargestellten Position für einen entsprechenden Betrieb arretierbar ist oder aus dieser Position in der Öffnung 32 in eine rechtwinklig hierzu verlaufende Stellung verschwenkbar ist, so dass zwischen den Rollen 3 geführte Kabel nach oben herausgenommen werden können.

Wie bereits eingangs ausgeführt, sind die Drehachsen 9 in Bohrungen 8 der Schenkel 5 bzw. 6 eingesetzt. Die Verbindung der Drehachsen 9 mit den Schenkeln 5 bzw. 6 erfolgt durch ein Verpressen der Drehachsen 9 mit den Schenkeln 5 bzw. 6. Alternativ können die Drehachsen 9 mit den Schenkeln 5, 6 verschweißt sein, wobei insbesondere innerhalb der hohl ausgebildeten Schenkel 5, 6 die Schweißnähte zwischen den Drehachsen 9 und den Innenwandungen der Schenkel 5 bzw. 6 angeordnet sind. Gegebenenfalls ist hier auch eine Punktverschweißung ausreichend.

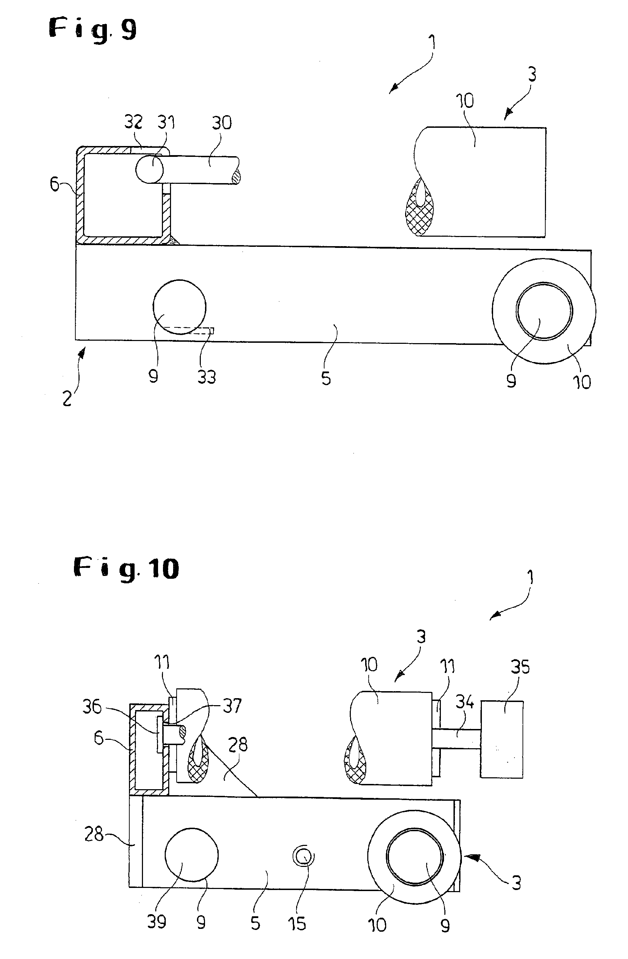

Figur 9 zeigt eine Alternative oder ergänzende Befestigung der Drehachsen 9 im Schenkel 5 und gegebenenfalls auch im Schenkel 6, wobei die Drehachse 9 alternativ bzw. ergänzend mit einem Stift 33 im Schenkel 5 bzw. 6 verkeilt ist. Der Stift 33 verläuft hierbei parallel zur Längserstreckung des jeweiligen Schenkels 5 bzw. 6. Im Übrigen stimmt die Ausführungsform gemäß Figur 9 mit der Ausführungsform gemäß Figur 7 überein, wobei bei der Ausführungsform gemäß Figur 9 auf das Verstärkungselement 28 verzichtet wurde.

Eine alternative Ausgestaltung einer lös- und demontierbaren Rolle 3 ist in Figur 10 dargestellt. Die Rolle 3 besteht wiederum aus dem Hohlzylinder 10 und der nicht näher dargestellten, den Hohlzylinder 10 durchgreifenden Drehachse 9, die ebenfalls hohl ausgebildet ist. Die Drehachse 9 ist von einer Stange 34 durchgriffen, die an ihrem einen Ende eine Handhabe 35 und ihrem anderen Ende einen plattenförmigen Abschnitt 36 aufweist.

Die Handhabe 35 weist ein Innengewinde auf und ist auf einen Gewindeabschnitt der Stange 34 aufgeschraubt. Im Bereich des Abschnitts 36 weist die ansonsten mit rundem Querschnitt ausgebildete Stange 34 einen quadratischen Querschnitt auf, mit dem die Stange 34 in eine einseitig offen ausgebildete Ausnehmung 37 des Schenkels 6 eingesteckt ist, wobei die Breite der Ausnehmung 37 geringfügig größer als die Kantenlänge des quadratischen Querschnitts der Stange 34 ist.

Nachdem die Stange 34 mit ihrem im Querschnitt quadratischen Bereich in die Ausnehmung 37 eingesteckt ist, wobei der Abschnitt 36 im Schenkel innenliegend und eine Distanzplatte 11 außenliegend angeordnet ist, wird die Handhabe 35 gedreht, bis die Handhabe 35 auf einer weiteren Distanzplatte 11 aufliegt und die Rolle 3 am Schenkel 6 verspannt.

Nach Lösen der Handhabe 35 kann die Stange 34 dann aus der Ausnehmung 37 herausgenommen und die Rolle 3 entfernt werden, um die in der Pritschenrolle 1 geführten Kabel herauszunehmen bzw. Kabel einzulegen.

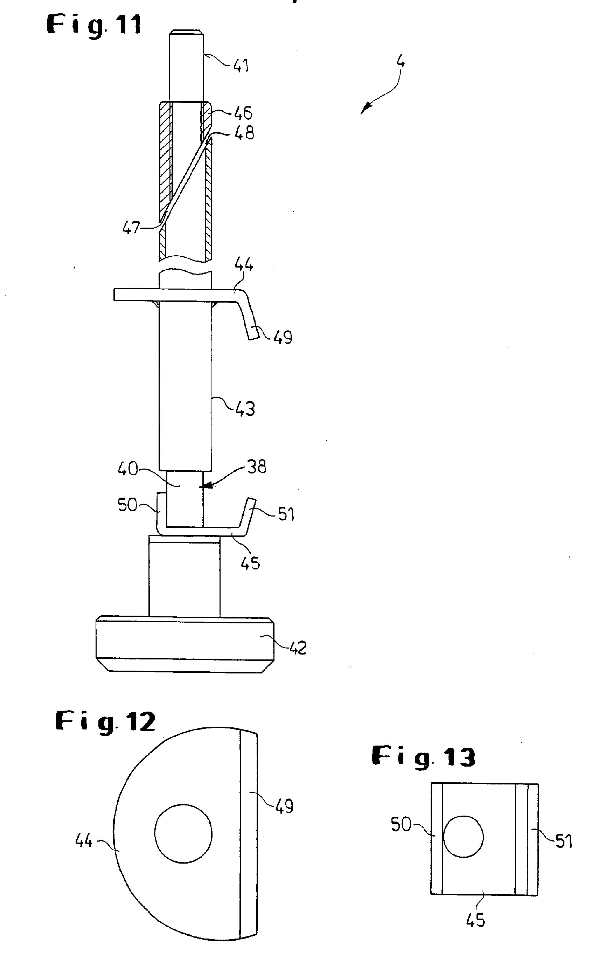

Die Figuren 11 bis 13 zeigen eine weitere Befestigungsvorrichtung 4, mit der die Pritschenrolle 1 nach den Figuren 3 bis 10 an einer nicht näher dargestellten Kabelpritsche befestigbar ist, wobei die Befestigungsvorrichtung gemäß Figur 11 in eine Bohrung 39 in einem der Schenkel 5 oder 6 einsteckbar und mit dem Schenkel 5 oder 6 verspannbar ist. Die Bohrung 39 verläuft koaxial zur hohl ausgebildeten Drehachse 9.

Die Befestigungsvorrichtung 4 gemäß Figur 11 besteht aus einem Klemmstab 38 mit einer Achse 40, die an einem Ende ein Außengewinde 41 und am anderen Ende eine drehfest an der Achse 40 befestigte Handhabe 42 aufweist. Die Achse 40 durchgreift eine Hülse 43, an der eine erste Klemmplatte 44 befestigt, nämlich angeschweißt ist. Die Achse 40 durchgreift ferner eine zweite Klemmplatte 45.

Auf das Außengewinde 41 ist eine Spindelmutter 46 mit einer Schrägfläche 47 spindelbar aufgeschraubt, wobei die Schrägfläche 47 mit einer korrespondierenden Schrägfläche 48 der Hülse 43 zusammenwirkt. Der Innendurchmesser der Hülse 43 ist geringfügig größer als der Außendurchmesser der Achse 40, so dass die Hülse mit einem gewissen radialen Spiel auf der Achse 40 geführt ist. Der Außendurchmesser der Spindelmutter 46 und der Hülse 43 entspricht dem Durchmesser der Bohrung 39, wobei die Außendurchmesser der Spindelmutter 46 und der Hülse 43 identisch ausgebildet sind.

Nach Einsetzen des Klemmstabes 38 in die Bohrung 39 wird die Spindelmutter 46 über die Handhabe 42 in Richtung auf die Hülse 43 gespindelt, bis die beiden Schrägflächen 47 und 48 aufeinanderliegend angeordnet sind. Durch ein weiteres Spindeln der Spindelmutter 46 wird die Hülse 43 im Rahmen ihres gegenüber dem Außendurchmesser der Achse 40 größeren Innendurchmessers in der Bohrung reibschlüssig verspannt. Gleichzeitig wird der Abstand der beiden Klemmplatten 44 und 45 auf die Seitenwandung der nicht näher dargestellten Kabelpritsche eingestellt, so dass über den Klemmstab 38 die Pritschenrolle 1 form- und reibschlüssig an der Kabelpritsche befestigt ist.

Die Klemmplatte 44 weist zu diesem Zweck eine zur Handhabe 42 gerichtete Abkantung 49 auf, welche den oberen Rand der Seitenwandung der Kabelpritsche übergreift.

Die Klemmplatte 45 hat an beiden Enden eine Abkantung 50 bzw. 51, wobei die Abkantung 50 rechtwinklig zur Klemmplatte 45 und parallel zur Längsachsenrichtung der Achse 40 ausgerichtet und am unteren Randbereich der Hülse 43 zur Anlage kommend ausgebildet ist. Die Abkantung 51 ist demgegenüber entsprechend der Abkantung 49 unter einem Winkel von < 90° relativ zur Klemmplatte 44 bzw. 45 ausgerichtet.

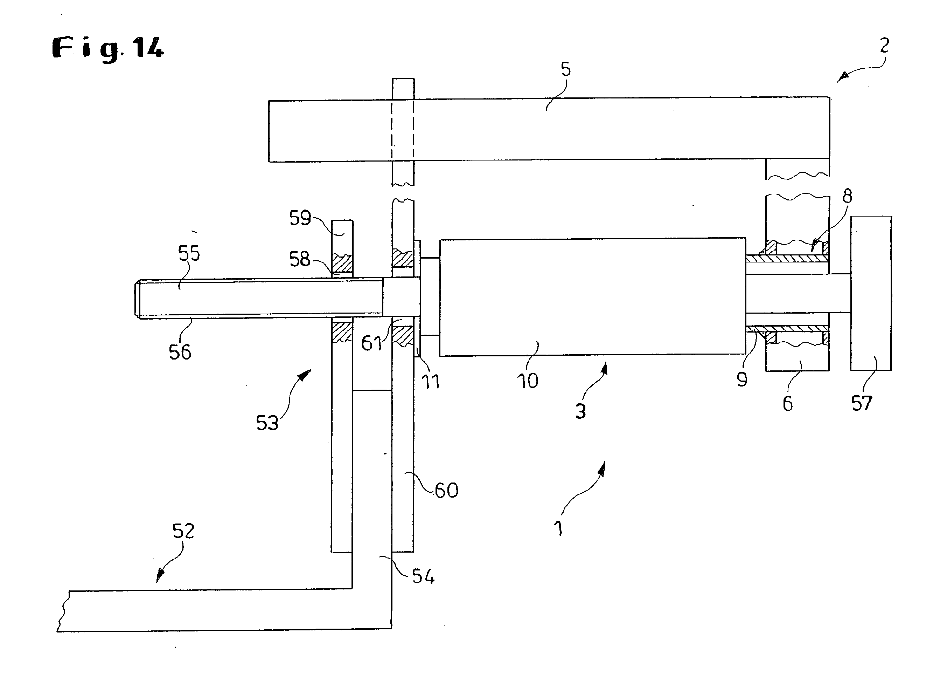

In Figur 14 ist eine weitere Ausführungsform einer erfindungsgemäßen Pritschenrolle 1 dargestellt, wobei bei dieser Ausführungsform gemäß Figur 14 die Pritschenrolle 1 nicht über den Rahmen 2 an der Kabelpritsche 52, sondern über eine Befestigungsvorrichtung 53 an einer Seitenwandung 54 der Kabelpritsche 52 verbunden ist, die mit dem freien Ende einer die Rolle 3 durchgreifenden Achse 55 verbunden ist.

Die Pritschenrolle 1 gemäß Figur 14 weist einen Rahmen 2 mit den Schenkeln 5 und 6 auf. Der Schenkel 6 hat eine Bohrung 8, in die die Drehachse der Rolle 3 eingesetzt ist, wobei die Drehachse 9 wiederum hohl ausgebildet ist. Die Drehachse 9 ist mit dem Schenkel 6 verschweißt. Auf der Drehachse 9 ist der Hohlzylinder 10 der Rolle angeordnet. Parallel zur Drehachse 9 verläuft der Schenkel 5, wobei zwischen dem Schenkel 5 und Außenmantelfläche des Hohlzylinders 10 ein Führungsraum für die Führung von Kabeln, Leitungen oder dergleichen angeordnet ist.

Die Schenkel 5, 6 sind versetzt zueinander angeordnet, bestehen aus Hohlprofilen mit rechteckigem Querschnitt und sind miteinander verschweißt.

Die Drehachse 9 ist von der Achse 55 durchgriffen, wobei die Achse 55 an ihrem im Bereich des Schenkels 6 liegenden Ende eine drehfest mit der Achse 55 verbundene Handhabe 57 aufweist. Am gegenüberliegenden Ende weist die Achse 55 ein Außengewinde 56 auf, welches in ein Innengewinde 58 einer Klemmplatte 59 eingeschraubt ist. Eine zweite Klemmplatte 60 ist zwischen einer Distanzplatte 11 am Ende der Drehachse 9 und der Klemmplatte 59 angeordnet, wobei die Achse 55 eine Bohrung 61 in der zweiten Klemmplatte 60 durchgreift.

Die zweite Klemmplatte 60 weist eine Länge auf, die ausreicht, dass die zweite Klemmplatte 60 mit einem Ende bis in den Bereich des Schenkels 5 reicht und an einer Seitenfläche des Schenkels 5 zur Anlage gebracht werden kann.

Zwischen den Klemmplatten 59 und 60 ist die Seitenwand 54 der Kabelpritsche 52 angeordnet. Über die Handhabe 57 können die Klemmplatten 59 und 60 unter Zwischenlage der Seitenwand 54 der Kabelpritsche 52 miteinander verspannt werden. Hierbei bilden der Schenkel 5, der Schenkel 6, der Hohlzylinder 10 und die zweite Klemmplatte 60 einen geschlossenen Raum, in dem Kabel oder Leitungen geführt werden können.

Ergänzend kann an dem Schenkel 5 eine zusätzliche Rolle, vorzugsweise im Bereich der Klemmplatte 60 oder zwei beabstandet zueinander angeordnete, sich in gleiche Richtung erstreckende Rollen angeordnet sein, so dass die Pritschenrolle 1 drei Rollen und bei Ergänzung einer weiteren Rolle im Schenkel 6 auch vier Rollen zur Führung von Kabeln und Leitungen aufweisen kann.

## Patentansprüche

1. Pritschenrolle zur Führung von Kabeln, Leitungen oder dergleichen bei der Verlegung in Kabelpritschen, mit einem Rahmen, zumindest einer drehbar am Rahmen gelagerten Rolle und einer Befestigungsvorrichtung, mit der der Rahmen an der Kabelpritsche befestigbar ist,
**dadurch gekennzeichnet,**
**dass** der Rahmen (2) L-förmig ausgebildet ist und zwei im wesentlichen rechtwinklig zueinander verlaufende Schenkel (5, 6) hat, wobei die Rolle (3) an einem Ende eines Schenkels (5, 6) des Rahmens (2) angeordnet und die Befestigungsvorrichtung (4) mit einem Schenkel (5, 6) des Rahmens (2) verbindbar ist.

2. Pritschenrolle zur Führung von Kabeln, Leitungen oder dergleichen bei der Verlegung in Kabelpritschen, mit einem Rahmen, zumindest einer drehbar am Rahmen gelagerten Rolle und einer Befestigungsvorrichtung, mit der der Rahmen an der Kabelpritsche befestigbar ist,
**dadurch gekennzeichnet,**
**dass** der Rahmen (2) L-förmig ausgebildet ist und zwei im wesentlichen rechtwinklig zueinander verlaufende Schenkel (5, 6) hat, wobei die Rolle (3) an einem Ende eines Schenkels (5, 6) des Rahmens (2) angeordnet und die Befestigungsvorrichtung (3) mit dem freien Ende einer Achse (55) der Rolle (3) verbindbar ist.

3. Pritschenrolle nach Anspruch 1 oder 2,
**dadurch gekennzeichnet,**
**dass** zwei Rollen (3) zueinander beabstandet an einem Schenkel (5, 6) des Rahmens (2) angeordnet sind, wobei ihre Drehachsen (9) im wesentlichen parallel zueinander ausgerichtet sind und sich in die gleiche Richtung erstrecken.

4. Pritschenrolle nach Anspruch 1 oder 2,
**dadurch gekennzeichnet,**
**dass** jeder Schenkel (5, 6) des Rahmens (2) zwei Rollen (3) aufweist, die jeweils zueinander beabstandet angeordnet sind und im wesentlichen parallel zueinander verlaufende Drehachsen (9) aufweisen, die sich paarweise in die gleiche Richtung erstrecken.

5. Pritschenrolle nach Anspruch 4,
**dadurch gekennzeichnet,**
**dass** zumindest eine Rolle (3) eines Schenkels (5, 6) des Rahmens (2) lösund demontierbar an diesem Schenkel (5, 6) des Rahmens (2) befestigt ist.

6. Pritschenrolle nach Anspruch 1,
**dadurch gekennzeichnet,**
**dass** zumindest eine Rolle (3) eines Schenkels (5, 6) des Rahmens (2) schwenk- oder klappbar an diesem Schenkel (5, 6) des Rahmens (2) befestigt ist.

7. Pritschenrolle nach Anspruch 1,
**dadurch gekennzeichnet,**
**dass** jeder Schenkel (5, 6) des Rahmens (2) eine Aufnahme für die Befestigungsvorrichtung (4) aufweist.

8. Pritschenrolle nach Anspruch 7,
**dadurch gekennzeichnet,**
**dass** die Aufnahme aus zumindest zwei rechtwinklig zueinander im Schenkel (5, 6) des Rahmens (2) ausgerichteten Bohrungen (15), vorzugsweise mit zumindest einem Gewindeabschnitt besteht.

9. Pritschenrolle nach Anspruch 8,
**dadurch gekennzeichnet,**
**dass** die Bohrungen (15) sich kreuzend im Schenkel (5, 6) des Rahmens (2) angeordnet sind.

10. Pritschenrolle nach Anspruch 8,
**dadurch gekennzeichnet,**
**dass** zumindest eine Bohrung (39) im Bereich der Drehachse (9) einer Rolle (3) angeordnet ist und vorzugsweise koaxial zu dieser Drehachse (9) verläuft.

11. Pritschenrolle nach Anspruch 8,
**dadurch gekennzeichnet,**
**dass** die Bohrungen (15) im wesentlichen im Mittelbereich der Schenkel (5, 6) des Rahmens (2) angeordnet sind.

12. Pritschenrolle nach Anspruch 1 oder 2,
**dadurch gekennzeichnet,**
**dass** die Schenkel (5, 6) des Rahmens (2) versetzt zueinander angeordnet sind.

13. Pritschenrolle nach Anspruch 1 oder 2,
**dadurch gekennzeichnet,**
**dass** der Rahmen (2) aus Profilabschnitten besteht, die vorzugsweise im Querschnitt rechtwinklig, insbesondere rechteckförmig ausgebildet sind.

14. Pritschenrolle nach Anspruch 13,
**dadurch gekennzeichnet,**
**dass** die Profilabschnitte des Rahmens (2) als Hohlprofile ausgebildet sind.

15. Pritschenrolle nach Anspruch 1 oder 2,
**dadurch gekennzeichnet,**
**dass** die Schenkel (5, 6) des Rahmens (2) miteinander verschweißt sind.

16. Pritschenrolle nach Anspruch 1 oder 2,
**dadurch gekennzeichnet,**
**dass** die fest mit dem Rahmen (2) verbundenen Rollen (3) eine drehfest an einem Schenkel (5, 6) des Rahmens (2) befestigte Hohlachse und einen drehbar auf der Hohlachse gelagerten Hohlzylinder (10) aufweisen.

17. Pritschenrolle nach Anspruch 5,
**dadurch gekennzeichnet,**
**dass** die lösbar an einem Schenkel (5, 6) des Rahmens (2) angeordnete Rolle (3) eine Hohlachse durchgreifende Stange (34) aufweist, die einen in eine Ausnehmung (37) des Schenkels (5, 6) einsteckbaren Abschnitt (36) hat, wobei der Abschnitt (36) der Stange (34) drehfest in der Ausnehmung (37) befestigbar, insbesondere klemmbar ist.

18. Pritschenrolle nach Anspruch 6,
**dadurch gekennzeichnet,**
**dass** die schwenk- oder klappbar an einem Schenkel (5, 6) des Rahmens (2) angeordnete Rolle (3) eine Achse (30) mit einem T-förmigen Ende (31) aufweist, welches Ende (31) in eine Öffnung (32) im Schenkel (5, 6) eingreift, die die Schwenk- oder Klappbewegung der Achse (30) relativ zum Schenkel (5, 6) begrenzt.

19. Pritschenrolle nach Anspruch 18,
**dadurch gekennzeichnet,**
**dass** die Achse (30) innerhalb der Öffnung (32) mit dem Schenkel (5, 6) des Rahmens (2) verspannbar ist.

20. Pritschenrolle nach Anspruch 1 oder 2,
**dadurch gekennzeichnet,**
**dass** die Befestigungsvorrichtung (4, 53) als eine vorzugsweise an einem Schenkel (5, 6) unter Zwischenlage einer Wandung (54) der Kabelpritsche (52) verspannbare Platte (59, 60; 17) ausgebildet ist.

21. Pritschenrolle nach Anspruch 20,
**dadurch gekennzeichnet,**
**dass** die Platte (17; 59, 60) kreisbogenabschnittförmig ausgebildet und mit einer Schraube (13) in einer Aufnahme verschraubbar ist.

22. Pritschenrolle nach Anspruch 20,
**dadurch gekennzeichnet,**
**dass** die Platte (17; 59, 60) an beiden Enden abgewinkelt ausgebildet und mit einer Schraube (13) in einer Aufnahme verschraubbar ist.

23. Pritschenrolle nach Anspruch 22,
**dadurch gekennzeichnet,**
**dass** die Schraube (13) an ihrem in die Aufnahme eingreifenden Ende eine im Querschnitt sechseckig ausgebildete Ausnehmung zum Ansatz eines Drehwerkzeuges hat.

24. Pritschenrolle nach Anspruch 1 oder 2,
**dadurch gekennzeichnet,**
**dass** die Befestigungsvorrichtung (4, 53) als U-förmiger Bügel (19) mit zwei Schenkeln (20) und einem die Schenkel (20) verbindenden Steg (21) ausgebildet ist, wobei die Schenkel (20) jeweils zumindest eine Bohrung (22) aufweisen, welche Bohrungen (22) koaxial zueinander angeordnet sind.

25. Pritschenrolle nach Anspruch 24,
**dadurch gekenntzeichnet**,
dass der Bügel (19) mit einem die Bohrungen (22) in den Schenkeln (20) des Bügels (19) und einen Schenkel (5, 6) des Rahmens (2) durchgreifenden Bolzen (33) am Rahmen (2) befestigbar ist.

26. Pritschenrolle nach Anspruch 24,
**dadurch gekennzeichnet,**
**dass** eine Bohrung (22) eines Schenkels (20) des Bügels (19) mit einem Innengewinde ausgebildet ist.

27. Pritschenrolle nach Anspruch 24,
**dadurch gekennzeichnet,**
**dass** der Bügel (19) in seinem die Schenkel (20) verbindenden Steg (21) eine Bohrung (24) zur Aufnahme eines Feststellbolzens (25) aufweist.

28. Pritschenrolle nach Anspruch 24,
**dadurch gekennzeichnet,**
**dass** die Bohrung (24) im Steg (21) ein Innengewinde aufweist.

29. Pritschenrolle nach Anspruch 1,
**dadurch gekennzeichnet,**
**dass** die Befestigungsvorrichtung (4) als Klemmstab (38) ausgebildet ist, der in eine Bohrung (39) des Rahmens (2) einsteckbar und in der Bohrung (39) verklemmbar ist.

30. Pritschenrolle nach Anspruch 29,
**dadurch gekennzeichnet,**
**dass** der Klemmstab (38) aus einer Achse (40) besteht, die zumindest in einem Teilbereich ein Außengewinde (41) mit einer daran spindelbar geführten Spindelmutter (46) aufweist und die Spindelmutter (46) mit einer auf die Achse (40) aufgesteckten Hülse (43) derart zusammenwirkt, dass Spindelmutter (46) und Hülse (43) in der Bohrung (39) des Rahmens (2) verspannbar sind.

31. Pritschenrolle nach Anspruch 29,
**dadurch gekennzeichnet,**
**dass** die Hülse (43) und die Spindelmutter (46) jeweils eine Schrägfläche (47, 48) aufweisen, die aufeinanderliegend angeordnet sind.

32. Pritschenrolle nach Anspruch 29,
**dadurch gekennzeichnet,**
**dass** am Klemmstab (38) zwei relativ zueinander bewegbare Klemmplatten (44, 45) angeordnet sind.

33. Pritschenrolle nach Anspruch 1 oder 2,
**dadurch gekennzeichnet,**
**dass** die Rolle (3) auf einer Stummelachse angeordnet ist.

34. Pritschenrolle nach Anspruch 1 oder 2,
**dadurch gekennzeichnet,**
**dass** die Drehachse (9) der Rolle (3) drehfest mit dem Schenkel (5, 6) des Rahmens (2) verbunden, insbesondere verpresst, verschweißt und/oder formschlüssig verbunden ist.
